# EUROPÄISCHE PATENTSCHRIFT

(11) **EP 2 839 133 B1**
(45) Veröffentlichungstag und Bekanntmachung des Hinweises auf die Patenterteilung: **05.07.2017**
(21) Anmeldenummer: 13718178.0
(22) Anmeldetag: 19.04.2013
(51) Int. Cl.: F02B 41/10

(54) **TURBOCOMPOUNDLAGERUNG ZUR ANBINDUNG EINES TURBOCOMPOUNDSYSTEMS AN EINE BRENNKRAFTMASCHINE**
TURBO COMPOUND BEARING FOR ATTACHING A TURBO COMPOUND SYSTEM TO AN INTERNAL COMBUSTION ENGINE
SUPPORT DE TURBOCOMPOUND POUR RELIER UN SYSTÈME DE TURBOCOMPOUND À UN MOTEUR À COMBUSTION INTERNE

(30) Priorität: 20.04.2012 DE 102012007765
(43) Veröffentlichungstag der Anmeldung: 25.02.2015
(73) Patentinhaber: Voith Patent GmbH, 89522 Heidenheim (DE)
(72) Erfinder: MORGUNOV, Eugen, 73430 Aalen (DE); HIRZEL, Ralf, 73642 Welzheim (DE); FIGLER, Thomas, 74564 Crailsheim (DE)
(74) Vertreter: Dr. Weitzel & Partner
(86) Internationale Anmeldenummer: PCT/EP2013/058221
(87) Internationale Veröffentlichungsnummer: WO 2013/156619

(56) Entgegenhaltungen:
- DE-A1-102009 038 771
- US-A- 4 586 337
- US-A1- 2010 031 935

## Beschreibung

Die vorliegende Erfindung betrifft eine Turbocompoundlagerung zur Anbindung eines Turbocompoundsystems an eine Brennkraftmaschine, im Einzelnen gemäß dem Oberbegriff von Anspruch 1.

Turbocompoundsysteme weisen eine Abgasturbine auf, die im Abgasstrom einer Brennkraftmaschine positioniert sind, um Abgasenergie in Antriebsleistung umzuwandeln, welche wiederum auf die Antriebswelle (Kurbelwelle) der Brennkraftmaschine rückgeführt wird. Hierdurch kann der Wirkungsgrad der Brennkraftmaschine verbessert und der Kraftstoffverbrauch reduziert werden.

WO 2008/135288 A1 beschreibt ein Turbocompoundsystem mit einer Abgasturbine, auch Abgasnutzturbine genannt, die ihre Antriebsleistung über eine hydrodynamische Kupplung auf die Kurbelwelle eines Verbrennungsmotors, in dessen Abgasstrom sie positioniert ist, überträgt, wobei die Abgasnutzturbine zugleich die Turbine eines Turboladers mit einem Strömungsverdichter zum Aufladen des Verbrennungsmotors darstellt. Im Unterschied zu herkömmlichen Ausführungsformen ist der Turboladerverdichter nicht auf einer gemeinsamen Welle mit der Abgasturbine positioniert, sondern die Turbine und der Verdichter weisen jeweils eine Welle mit einem Ritzel auf und beide Ritzel kämmen mit einem von der hydrodynamischen Kupplung auf ihrem äußeren Umfang getragenen Zahnrad. Eine solche Ausführungsform bietet den Vorteil einer besonders kompakten Anordnung von Abgasturbine, Strömungsverdichter und hydrodynamischer Kupplung sowie dem Abtrieb, der in eine Verbindung mit der Antriebswelle der Brennkraftmaschine geschaltet wird und in der Regel durch ein Zahnrad dargestellt wird.

Ein Problem in der Praxis bei der zuvor dargestellten Ausführungsform liegt darin, dass das Turbocompoundsystem eine Vielzahl von einzelnen Aggregaten und Schnittstellen aufweist, die zueinander zentriert werden müssen, um einen korrekten und verschleißarmen Betrieb zu ermöglichen, was beim Anbau der einzelnen Aggregate an eine Brennkraftmaschine zu einem hohen und fehleranfälligen Montageaufwand führt.

Der vorliegenden Erfindung liegt die Aufgabe zugrunde, eine Turbocompoundlagerung zur Anbindung eines Turbocompoundsystems an eine Brennkraftmaschine anzugeben, welche eine kompakte Anordnung der einzelnen Aggregate bietet und zugleich eine sichere und schnelle Montage des Turbocompoundsystems an der Brennkraftmaschine ermöglicht.

Die erfindungsgemäße Aufgabe wird durch eine Turbocompoundlagerung mit den Merkmalen von Anspruch 1 gelöst. In den abhängigen Ansprüchen sind vorteilhafte und besonders zweckmäßige Ausgestaltungen der Erfindung angegeben.

Eine erfindungsgemäße Turbocompoundlagerung zur Anbindung eines Turbocompoundsystems an eine Brennkraftmaschine umfasst eine Abgasturbine mit einer in einem Turbinenlagergehäuse gelagerten Turbinenwelle, ferner eine hydrodynamische Kupplung mit einer in einem Kupplungslagergehäuse gelagerten Kupplungswelle sowie einen Anschluss zur Befestigung der Brennkraftmaschine bzw. der Kupplung und/oder der Abgasturbine an der Brennkraftmaschine.

Erfindungsgemäß wird der Anschluss durch einen plattenförmigen Grundträger gebildet. Der Grundträger weist somit zumindest im Wesentlichen die Form einer Platte, gemäß einer Ausführungsform im Wesentlichen ebenen Platte auf, die an der Brennkraftmaschine (Verbrennungsmotor) angeschlossen werden kann, beispielsweise an einem Motorgehäuse der Brennkraftmaschine, insbesondere stirnseitig an diesem.

Der plattenförmige Grundträger weist wenigstens eine erste Zentrierfläche auf, an welcher das Kupplungslagergehäuse ausgerichtet ist. Somit kann das Kupplungslagergehäuse durch Anliegen an der ersten Zentrierfläche exakt gegenüber dem plattenförmigen Grundträger ausgerichtet bzw. zentriert werden.

Erfindungsgemäß weist das Kupplungslagergehäuse wenigstens eine zweite Zentrierfläche auf, an welcher das Turbinenlagergehäuse ausgerichtet ist. Somit kann das Turbinenlagergehäuse exakt an dem Kupplungslagergehäuse ausgerichtet bzw. zentriert werden.

Eine günstige erfindungsgemäße Ausführungsform sieht vor, dass die hydrodynamische Kupplung ein Primärrad und ein Sekundärrad aufweist, die miteinander einen torusförmigen mit einem Arbeitsmedium befüllbaren Arbeitsraum ausbilden, und das Primärrad mit der Turbinenwelle in Triebverbindung steht sowie das Sekundärrad mit einem Abtrieb zur Verbindung mit einer Antriebswelle der Brennkraftmaschine in Triebverbindung steht. Gemäß dieser Ausführungsform ist ferner das Kupplungslagergehäuse durch den Grundträger durchgesteckt oder in diesen eingesteckt und dabei derart relativ zu dem Grundträger positioniert, dass die Triebverbindung zwischen dem Primärrad und der Turbinenwelle zumindest teilweise auf einer ersten Seite des Grundträgers ausgebildet wird und die Triebverbindung zwischen dem Sekundärrad und dem Abtrieb zumindest teilweise auf einer der ersten Seite abgewandten zweiten Seite des Grundträgers ausgebildet wird.

Beispielsweise kann die Triebverbindung zwischen dem Primärrad und der Turbinenwelle durch ein auf dem Primärrad oder neben dem Primärrad positioniertes Außenzahnrad der hydrodynamischen Kupplung und ein auf der oder an der Turbinenwelle vorgesehenes Turbinenzahnrad gebildet werden.

Die Triebverbindung zwischen dem Sekundärrad und dem Abtrieb kann beispielsweise durch die Kupplungswelle, welche das Sekundärrad trägt oder an diesem angeschlossen ist, und ein auf dieser auf der Seite des Abtriebs positioniertes oder angeschlossenes Ritzel, das mit dem Abtrieb in Triebverbindung steht, gebildet werden. Beispielsweise kämmt das Ritzel unmittelbar mit einem Zahnrad, das den Abtrieb bildet oder auf einer dem Abtrieb bildenden Abtriebswelle angeordnet ist, oder gemäß einer alternativen Ausführungsform kämmt das Ritzel mit einem auf dem Grundträger oder einem anderen Bauteil gelagerten Zwischenzahnrad, das wiederum mit einem den Abtrieb ausbildenden Zahnrad oder einem Zahnrad auf der Abtriebswelle kämmt. Andere Ausführungsformen sind möglich.

Wenn die Kupplungswelle das Primärrad und/oder das Sekundärrad an einem ihrer beiden Enden und ein Ritzel, das in Triebverbindung mit dem Abtrieb oder der Turbinenwelle steht, an dem anderen ihrer beiden Enden trägt, ist es günstig, wenn die Kupplungswelle durch eine Öffnung in dem Grundträger durchgeführt positioniert ist, um die entsprechenden Triebverbindungen auf beiden Seiten des Grundträgers herstellen zu können.

Beispielsweise weist der Grundträger eine erste Öffnung auf, durch welche die Turbinenwelle durchgesteckt positioniert ist sowie eine zweite Öffnung, durch welche das Kupplungsgehäuse durchgesteckt oder in welche das Kupplungsgehäuse eingesteckt positioniert ist.

Eine besonders vorteilhafte Ausführungsform sieht vor, dass ferner ein Strömungsverdichter mit einer in einem Verdichterlagergehäuse gelagerten Verdichterwelle vorgesehen ist und der Grundträger und/oder das Kupplungsgehäuse wenigstens eine dritte Zentrierfläche aufweist, an welcher das Verdichterlagergehäuse ausgerichtet ist. Somit kann das Verdichterlagergehäuse die dritte Zentrierfläche berührend leicht an dem Kupplungsgehäuse und/oder dem Grundträger ausgerichtet bzw. zentriert werden.

Günstig ist es, wenn in diesem Fall der Grundträger eine dritte Öffnung aufweist, durch welche das Verdichterlagergehäuse und/oder die Verdichterwelle durchgesteckt oder in welche das Verdichterlagergehäuse und/oder die Verdichterwelle eingesteckt positioniert ist.

Beispielsweise trägt die Verdichterwelle ein Verdichterzahnrad, das in einer Triebverbindung mit dem Primärrad der hydrodynamischen Kupplung steht. Dabei ist es besonders günstig, wenn die Verdichterwelle auf einer ersten Seite des Grundträgers ein Verdichterrad trägt und die Turbinenwelle auf einer zweiten Seite des Grundträgers, die der ersten Seite abgewandt ist, ein Turbinenrad trägt.

Ferner kann vorgesehen sein, dass die Turbinenwelle ein Turbinenzahnrad trägt und die Verdichterwelle ein Verdichterzahnrad trägt und beide Zahnräder mit einem Außenzahnrad außen auf der hydrodynamischen Kupplung oder axial neben der hydrodynamischen Kupplung kämmen.

Eine vorteilhafte erfindungsgemäße Ausführungsform sieht vor, dass die zweite Zentrierfläche, also die Zentrierfläche zum Ausrichten des Turbinenlagergehäuses gegenüber der hydrodynamischen Kupplung, durch einen ersten, vollständig umlaufenden oder in Umfangsrichtung ein- oder mehrfach unterbrochenen Bund am Kupplungslagergehäuse mit einer radial nach außen gerichteten Oberfläche gebildet wird, welcher von einem Bund mit radial nach innen gerichteter Oberfläche des Turbinenlagergehäuses umgriffen wird. Somit kann das Turbinenlagergehäuse sozusagen auf das Kupplungslagergehäuse aufgesteckt werden, um dieses gegenüber dem Kupplungslagergehäuse auszurichten und damit den exakten Eingriff der Triebverbindung zwischen der hydrodynamischen Kupplung und der Abgasturbine herzustellen.

Besonders günstig ist es, wenn die dritte Zentrierfläche durch einen zweiten, vollständig umlaufenden oder in Umfangsrichtung ein- oder mehrfach unterbrochenen Bund am Kupplungslagergehäuse mit einer radial nach außen gerichteten Oberfläche gebildet wird, welcher von einem Bund mit radial nach innen gerichteter Oberfläche des Verdichterlagergehäuses umgriffen wird. Somit kann das Verdichterlagergehäuse sozusagen auf das Kupplungslagergehäuse aufgesteckt werden, um die beiden Gehäuse relativ zueinander auszurichten und damit den Eingriff für die Triebverbindung zwischen der hydrodynamischen Kupplung und dem Strömungsverdichter exakt zu positionieren.

Der erste Bund und/oder der zweite Bund am Kupplungslagergehäuse kann durch eine Vielzahl, insbesondere drei oder mehr über dem Umfang verteilt angeordnete einzelne Arme gebildet werden.

Das Turbinenlagergehäuse kann ein axiales Ende des Kupplungslagergehäuses vollständig umschließen und vorteilhaft gegenüber dem Grundträger abgedichtet sein. Beispielsweise ist das Turbinenlagergehäuse an dem Grundträger angeschraubt oder angeflanscht, vorteilhaft über dem gesamten Umfang des Turbinenlagergehäuses.

Das Verdichterlagergehäuse kann ein axiales Ende, insbesondere das dem vom Turbinenlagergehäuse umschlossenen axialen Ende entgegengesetzte axiale Ende des Kupplungslagergehäuses vollständig umschließen. Auch hier ist es günstig, das Verdichterlagergehäuse gegenüber dem Grundträger abzudichten und insbesondere an diesem anzuschrauben bzw. anzuflanschen, vorteilhaft über dem gesamten Umfang des Verdichterlagergehäuses.

Zwischen dem Verdichterlagergehäuse und der hydrodynamischen Kupplung kann eine Ölübergabestelle vorgesehen sein. Zusätzlich oder alternativ kann auch zwischen dem Turbinenlagergehäuse und der hydrodynamischen Kupplung eine Ölübergabestelle vorgesehen sein. Diese Ölübergabestelle(n) kann/können beispielsweise dazu dienen, den verzahnten Eingriff zwischen dem Verdichterzahnrad und/oder Turbinenzahnrad und dem Kupplungszahnrad zu schmieren. Auch ist es möglich, die Lager der Kupplungswelle mit dem Öl aus der Abgasturbine und/oder aus dem Strömungsverdichter zu schmieren.

Für alle Lagerstellen kommen sowohl Gleitlager als auch Wälzlager in Betracht. Insbesondere kommt für die Kupplungswelle, die Turbinenwelle und/oder die Verdichterwelle auch eine sogenannte Hybridlagerung in Betracht, bei welcher die Welle sowohl mit einem Gleitlager, insbesondere Schwimmbuchsenlager, als auch mit einem Wälzlager, beispielsweise Rollenlager oder Kugellager, gelagert ist. Beispielsweise kann an einem axialen Ende das Gleitlager, insbesondere Schwimmbuchsenlager und an dem anderen axialen Ende das Wälzlager vorgesehen sein.

Der erfindungsgemäße Aufbau der Lagerung ermöglicht eine schnelle und kostengünstige sowie fehlersichere Montage der verschiedenen Komponenten des Turbocompoundsystems. Ferner ergibt sich die einfache Möglichkeit, verschieden große Strömungsmaschinen einzubauen, ohne wesentliche Umgestaltung der Konstruktion bzw. Ausrichtung.

Eine Ausführungsform sieht vor, dass der Arbeitsraum der hydrodynamischen Kupplung mit Arbeitsmedium über einen oder mehrere Kanäle in der Kupplungswelle versorgt wird. Hierzu kann beispielsweise eine Öffnung im Verdichterlagergehäuse und/oder Turbinenlagergehäuse, welches ein axiales Ende der Kupplungswelle gemäß einer Ausführungsform überdeckt, vorgesehen sein, um das Arbeitsmedium zuzuführen oder abzuführen. Entsprechend kann in dem Verdichterlagergehäuse und/oder dem Turbinenlagergehäuse vorteilhaft eine Drehdurchführung für das Arbeitsmedium vorgesehen sein. Jedoch kommen auch Ausführungsformen ohne Arbeitsmediumdurchführungen im Gehäuse im Bereich der Stirnseite der Kupplungswelle in Betracht.

Eine Ausführungsform sieht vor, dass das Verdichterrad außerhalb des Verdichterlagergehäuses an der Verdichterwelle angeschlossen, insbesondere auf dieser aufgesteckt oder in dieser eingesteckt ist.

Eine Ausführungsform sieht vor, dass das Turbinenrad außerhalb des Turbinenlagergehäuses an der Turbinenwelle angeschlossen, insbesondere auf dieser aufgesteckt oder in dieser eingesteckt ist.

Bei den zuvor genannten Ausführungsformen kann jeweils ein eigenes Gehäuse für das Turbinenrad bzw. das Verdichterrad vorgesehen sein, das an dem Turbinenlagergehäuse bzw. dem Verdichterlagergehäuse und/oder dem Grundträger montiert ist. Diese Gehäuse können einen Einströmkanal bzw. Ausströmkanal, beispielsweise in Form einer Spirale und/oder mit einer axialen, radialen oder tangentialen Zuströmung bzw. Abströmung bilden.

Die Erfindung soll nachfolgend anhand eines Ausführungsbeispiels und den Figuren exemplarisch beschrieben werden.

Es zeigen:
- Fig. 1: eine erste Ansicht einer erfindungsgemäß ausgeführten Turbocompoundlagerung mit einem im Grundträger montierten Turbinenlagergehäuse;
- Fig. 2: zwei verschiedene Ansichten der Baugruppe aus der Fig. 1 ergänzt um die Turbinenwelle, die Verdichterwelle und die verschiedenen Zahnräder zur Herstellung der Triebverbindungen;
- Fig. 3: eine Schnittansicht gemäß der Fig. 1 mit zusätzlich montiertem Turbinenlagergehäuse und auf die Turbinenwelle aufgesetztem Turbinenrad sowie montiertem Verdichtergehäuse in einem Schnitt durch die Turbinenwelle;
- Fig. 4: die Baugruppe gemäß der Fig. 3, jedoch in einem Schnitt durch die Verdichterwelle, somit in Umfangsrichtung um die Kupplungswelle versetzt zu dem Schnitt gemäß der Fig. 3.

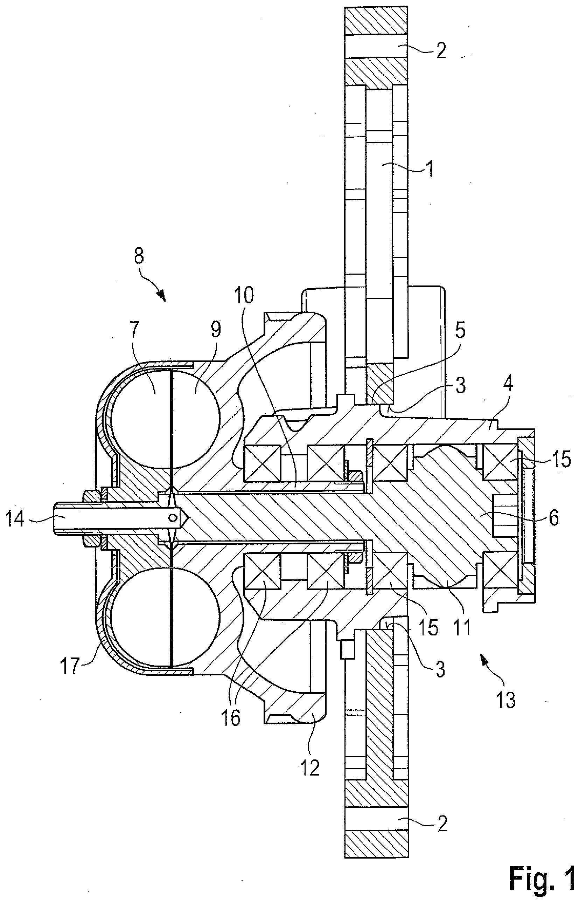

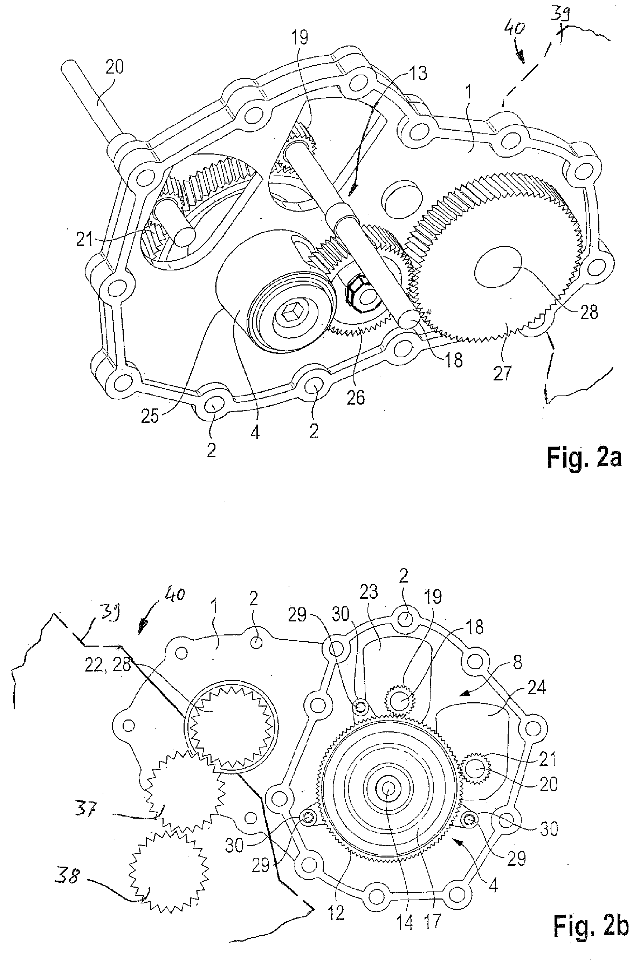

In der Fig. 1 ist der plattenförmige Grundträger mit dem Bezugszeichen 1 versehen. Dieser weist, wie auch besonders aus der Fig. 2 ersichtlich ist, entlang seines äußeren Umfangs Öffnungen 2 zum Anschluss bzw. zum Anschrauben des Turbinenlagergehäuses und des Verdichterlagergehäuses (in den Fig. 1 und 2 nicht dargestellt) auf.

Eine erste Zentrierfläche 3 wird durch den Innenrand einer Durchgangsöffnung in dem Grundträger 1 gebildet, durch welche das Kupplungslagergehäuse 4 durchgesteckt ist. Das Kupplungslagergehäuse 4 weist einen äußeren Bund 5 auf, der an der ersten Zentrierfläche 3 anliegt.

Im Kupplungslagergehäuse 4 ist die Kupplungswelle 6 gelagert, beispielsweise durch die hier gezeigten vier Lager, insbesondere Wälzlager. Einzelne oder alle Lager können jedoch auch als Gleitlager ausgeführt sein. Auch kommt eine andere Lagerzahl in Betracht.

Die Kupplungswelle 6 trägt das Sekundärrad 7 der hydrodynamischen Kupplung 8 drehfest. Das Primärrad 9 der hydrodynamischen Kupplung 8 ist hingegen relativ verdrehbar zur Kupplungswelle 6 im Kupplungslagergehäuse 4 gelagert, im gezeigten Ausführungsbeispiel fliegend mittels einer Hohlwelle 10, welche die Kupplungswelle 6 umschließt.

Die Kupplungswelle 6 trägt ein Ritzel 11. Um einen kämmenden Eingriff mit dem Ritzel 11 herstellen zu können, weist das Kupplungslagergehäuse 4 eine Eingriffsöffnung 13 auf.

Das Primärrad 9 der hydrodynamischen Kupplung 8 trägt ein Kupplungszahnrad 12. Dieses umschließt im gezeigten Ausführungsbeispiel das Kupplungslagergehäuse 4, was jedoch nicht zwingend ist.

Die Kupplungswelle 6 ragt mit einem axialen Ende aus dem Kupplungslagergehäuse 4 heraus. Auf diesem axialen Ende ist die hydrodynamische Kupplung 8 positioniert sowie eine Arbeitsmediumzufuhr in Form eines in die Kupplungswelle 6 stirnseitig eingebrachten Arbeitsmediumkanals 14.

In dem gezeigten Ausführungsbeispiel ist somit sowohl das Sekundärrad 7 angeschlossen an der Kupplungswelle 6 über die Kupplungswelle 6 und die zugehörigen Lager 15 im Kupplungslagergehäuse 4 gelagert, als auch das Primärrad 9 angeschlossen an der Hohlwelle 10 über die Lager 16.

In der Fig. 2 ist in einer dreidimensionalen Ansicht und einer Draufsicht auf die Seite mit der hydrodynamischen Kupplung 8 nochmals der Grundträger 1 mit den Öffnungen 2, das Kupplungslagergehäuse 4 sowie die Kupplungsschale 17 dargestellt, welche am Primärrad 9 mit dem Kupplungszahnrad 12 angeschlossen ist, siehe hierzu auch ergänzend die Schnittdarstellung in der Fig. 1.

Zu erkennen sind ferner die Turbinenwelle 18 mit dem Turbinenzahnrad 19, das mit dem Kupplungszahnrad 12 kämmt, und die Verdichterwelle 20 mit dem Verdichterzahnrad 21, das ebenfalls mit dem Kupplungszahnrad 12 kämmt. Wie man sieht, ist das Turbinenzahnrad 19 gegenüber dem Verdichterzahnrad 21 über dem Umfang des Kupplungszahnrads 12 versetzt angeordnet, beispielsweise um einen Winkel zwischen 10° und 120°, insbesondere von weniger als 90 Grad.

Ferner erkennt man auf der Seite der hydrodynamischen Kupplung 8 den Abtrieb 22, der zum Verbinden mit der Antriebswelle einer Brennkraftmaschine 40 dient, um Antriebsleistung auf die Antriebswelle zu übertragen oder von der Antriebswelle Antriebsleistung auf den Abtrieb 22 zu übertragen und hierdurch den Strömungsverdichter zur Aufladung der Brennkraftmaschine 40 anzutreiben. Die Verbindung des Abtriebs 22 zu einer Kurbelwelle (oder allgemeinen Antriebswelle) der Brennkraftmaschine 40 kann beispielsweise durch ein erstes Zahnrad 37 und ein zweites Zahnrad 38 innerhalb der Brennkraftmaschine 40 hergestellt werden, wobei das erste Zahnrad 37 mit einem durch den Abtrieb 22 gebildeten Ritzel kämmt, das zweite Zahnrad 38 mit dem ersten Zahnrad 37 kämmt und das zweite Zahnrad ferner gegebenenfalls über weitere zwischengeschaltete Zahnräder mit einem Zahnrad auf der Kurbelwelle kämmt. Mit 39 ist in den Figuren 2a und 2b exemplarisch ein Teil des Gehäuses 39 der Brennkraftmaschine 40 dargestellt. Beispielsweise kann, wie dargestellt, der plattenförmige Grundträger 1 stirnseitig an dem Gehäuse 39 der Brennkraftmaschine 40 angeschlossen, insbesondere angeschraubt sein, insbesondere mittels Schrauben durch einige der Öffnungen 2. Dabei ist die Brennkraftmaschine 40 vorteilhaft auf derselben Seite des plattenförmigen Grundträgers 1 positioniert, wie die Kupplungsschale 17 der hydrodynamischen Kupplung 8, somit in der Figur 2a betrachtet hinter dem plattenförmigen Grundträger 1 und in der Figur 2b vor dem plattenförmigen Grundträger 1. Andere Gestaltungen sind natürlich möglich, auch ein mittelbarer Anschluss des plattenförmigen Grundträgers 1 an der Brennkraftmaschine 40, das heißt, mit weiteren zwischen dem plattenförmigen Grundträger 1 und der Brennkraftmaschine 40 vorgesehenen Bauteilen.

Die Turbinenwelle 18 ist durch eine erste Öffnung 23 in dem Grundträger 1 durchgesteckt. Die Verdichterwelle 20 ist von der anderen Seite des Grundträgers 1 in eine dritte Öffnung 24 des Grundträgers 1 eingesteckt. Das Kupplungslagergehäuse 4 ist durch eine zweite Öffnung 25 des Grundträgers 1 durchgesteckt, wobei wie mit Bezug auf die Fig. 1 erläutert wurde, diese zweite Öffnung 25 die erste Zentrierfläche 3 ausbildet.

Die Triebverbindung zum Abtrieb 22 wird durch ein Zwischenzahnrad 26 und ein Abtriebszahnrad 27 auf der Abtriebswelle 28 des Abtriebs 22 hergestellt. Das Zwischenzahnrad 26 greift in die Eingriffsöffnung 13 des Kupplungslagergehäuses 4 ein, und kämmt mit dem Ritzel 11 auf der Kupplungswelle 6.

In der Fig. 2 gut zu erkennen sind auch noch drei Arme 29 des Kupplungslagergehäuses 4, welche eine dritte Zentrierfläche 30 zur Zentrierung des Verdichterlagergehäuses gegenüber der hydrodynamischen Kupplung 8, wie später noch erläutert werden wird, ausbilden. In dem gezeigten Ausführungsbeispiel dienen die Arme 29 ferner zur Verschraubung des Kupplungslagergehäuses 4 an dem Grundträger 1.

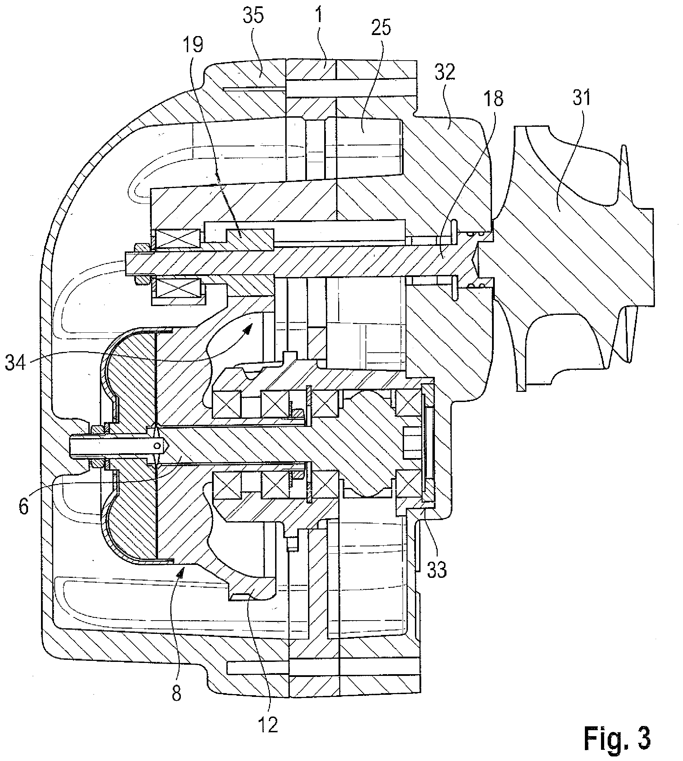

In der Fig. 3 erkennt man, wie das Turbinenrad 31 an einem axialen Ende der Turbinenwelle 18 positioniert ist. Ferner erkennt man, wie das Turbinenlagergehäuse 32 an dem Grundträger 1 angeschlossen ist und gleichzeitig eine zweite Zentrierfläche 33 außen am Kupplungslagergehäuse 4, hier am axialen Ende desselben, umschließt, um das Turbinenlagergehäuse 32 gegenüber der hydrodynamischen Kupplung 8 mit der Kupplungswelle 6 und besonders dem Kupplungszahnrad 12, mit welchem das Turbinenzahnrad 19 kämmt, auszurichten. Das Turbinenlagergehäuse 32 ist durch die zweite Öffnung 25 des Grundträgers 1 durchgesteckt, zusammen mit der Turbinenwelle 18, und weist ebenfalls eine Eingriffsöffnung 34 auf, um den kämmenden Eingriff zwischen dem Ritzel 12 und dem Turbinenzahnrad 19 herzustellen.

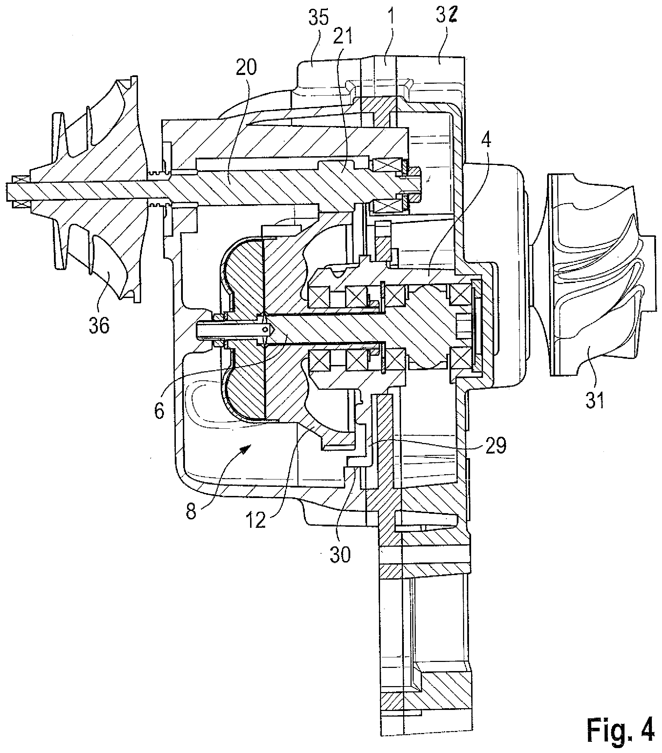

Das Verdichterlagergehäuse 35 ist von der anderen Seite wie das Turbinenlagergehäuse 32 auf den Grundträger 1 aufgesetzt und mit diesem verschraubt. Die Zentrierung der Verdichterlagergehäuses 35 und damit der hierin gelagerten Verdichterwelle 20 und dem Verdichterzahnrad 21 gegenüber der hydrodynamischen Kupplung 8, besonders dem Kupplungszahnrad 12, wird aus der Fig. 4 deutlich. So erkennt man hier einen der Arme 29 des Kupplungslagergehäuses 4, der die dritte Zentrierfläche 30 ausbildet.

Außerhalb des Verdichterlagergehäuses 35 trägt die Verdichterwelle 20 das Verdichterrad 36.

Wie man insbesondere aus den Darstellungen in den Figuren erkennen kann, bildet der plattenförmige Grundträger 1, der hier als separates Bauteil hergestellt ist, einen besonders zuverlässigen und exakt die Bauteile des Turbocompoundsystems zur Brennkraftmaschine ausrichtenden Anschluss zur Anbindung des Turbocompoundsystems an die Brennkraftmaschine.

### Bezugszeichenliste

- 1: Grundträger
- 2: Öffnungen
- 3: erste Zentrierfläche
- 4: Kupplungslagergehäuse
- 5: äußerer Bund
- 6: Kupplungswelle
- 7: Sekundärrad
- 8: hydrodynamische Kupplung
- 9: Primärrad
- 10: Hohlwelle
- 11: Ritzel
- 12: Kupplungszahnrad
- 13: Eingriffsöffnung
- 14: Arbeitsmediumkanal
- 15: Lager
- 16: Lager
- 17: Kupplungsschale
- 18: Turbinenwelle
- 19: Turbinenzahnrad
- 20: Verdichterwelle
- 21: Verdichterzahnrad
- 22: Abtrieb
- 23: erste Öffnung
- 24: dritte Öffnung
- 25: zweite Öffnung
- 26: Zwischenrad
- 27: Abtriebszahnrad
- 28: Abtriebswelle
- 29: Arme
- 30: dritte Zentrierfläche
- 31: Turbinenrad
- 32: Turbinenlagergehäuse
- 33: zweite Zentrierfläche
- 34: Eingriffsöffnung
- 35: Verdichterlagergehäuse
- 36: Verdichterrad
- 37: erstes Zahnrad in der Brennkraftmaschine
- 38: zweites Zahnrad in der Brennkraftmaschine
- 39: Gehäuse
- 40: Brennkraftmaschine

## Patentansprüche

1. Turbocompoundlagerung zur Anbindung eines Turbocompoundsystems an eine Brennkraftmaschine (40), umfassend
eine Abgasturbine mit einer in einem Turbinenlagergehäuse (32) gelagerten Turbinenwelle (18);
eine hydrodynamische Kupplung (8) mit einer in einem Kupplungslagergehäuse (4) gelagerten Kupplungswelle (6); wobei
zur Befestigung der Brennkraftmaschine (40) ein plattenförmiger Grundträger (1) vorgesehen ist, der wenigstens eine erste Zentrierfläche (3) aufweist, an welcher das Kupplungslagergehäuse (4) ausgerichtet ist; **dadurch gekennzeichnet, dass**
das Kupplungslagergehäuse (4) wenigstens eine zweite Zentrierfläche (33) aufweist, an welcher das Turbinenlagergehäuse (32) ausgerichtet ist, und das Kupplungslagergehäuse (4) von einer Seite und das Turbinenlagergehäuse (32) von der anderen Seite in den plattenförmigen Grundträger (1) eingesteckt ist.

2. Turbocompoundlagerung gemäß Anspruch 1, **dadurch gekennzeichnet, dass** die hydrodynamische Kupplung (8) ein Primärrad (9) und ein Sekundärrad (7) aufweist, die miteinander einen torusförmigen Arbeitsraum ausbilden, das Primärrad (9) mit der Turbinenwelle (18) in Triebverbindung steht, das Sekundärrad (7) mit einem Abtrieb (22) zur Verbindung mit einer Antriebswelle der Brennkraftmaschine in Triebverbindung steht und das Kupplungslagergehäuse (4) durch den Grundträger (1) durchgesteckt oder in diesen eingesteckt derart positioniert ist, dass die Triebverbindung zwischen dem Primärrad (9) und der Turbinenwelle (18) zumindest teilweise auf einer ersten Seite des Grundträgers (1) ausgebildet ist und die Triebverbindung zwischen dem Sekundärrad (7) und dem Abtrieb (22) zumindest teilweise auf einer der ersten Seite abgewandten zweiten Seite des Grundträgers (1) ausgebildet ist.

3. Turbocompoundlagerung gemäß Anspruch 2, **dadurch gekennzeichnet, dass** der Abtrieb (22) durch ein auf dem Grundträger (1) gelagertes Abtriebszahnrad (27) und/oder eine Abtriebswelle (28) gebildet wird.

4. Turbocompoundlagerung gemäß einem der Ansprüche 2 oder 3, **dadurch gekennzeichnet, dass** die Kupplungswelle (6) das Primärrad (9) oder das Sekundärrad (7) an einem ihrer beiden axialen Enden und ein Ritzel (11), das in Triebverbindung mit dem Abtrieb (22) oder der Turbinenwelle (18) steht, an dem anderen ihrer beiden Enden trägt und durch eine Öffnung (25) in dem Grundträger (1) durchgeführt positioniert ist.

5. Turbocompoundlagerung gemäß einem der Ansprüche 1 bis 4, **dadurch gekennzeichnet, dass** der Grundträger (1) eine erste Öffnung (23) aufweist, durch welche die Turbinenwelle (18) durchgesteckt positioniert ist, und eine zweite Öffnung (25) aufweist, durch welche das Kupplungslagergehäuse (4) durchgesteckt oder in welche das Kupplungslagergehäuse (4) eingesteckt positioniert ist.

6. Turbocompoundlagerung gemäß einem der Ansprüche 1 bis 5, **dadurch gekennzeichnet, dass** ein Strömungsverdichter mit einer in einem Verdichterlagergehäuse (35) gelagerten Verdichterwelle (20) vorgesehen ist und der Grundträger (1) und/oder das Kupplungslagergehäuse (4) wenigstens eine dritte Zentrierfläche (30) aufweist, an welcher das Verdichterlagergehäuse (35) ausgerichtet ist.

7. Turbocompoundlagerung gemäß der Ansprüche 5 und 6, **dadurch gekennzeichnet, dass** der Grundträger (1) eine dritte Öffnung (24) aufweist, durch welche oder in welche das Verdichterlagergehäuse (35) und/oder die Verdichterwelle (20) durchgesteckt oder eingesteckt positioniert ist.

8. Turbocompoundlagerung gemäß einem der Ansprüche 6 oder 7, **dadurch gekennzeichnet, dass** die Verdichterwelle (22) ein Verdichterzahnrad (21) trägt, das in Triebverbindung mit dem Primärrad (9) der hydrodynamischen Kupplung (8) steht.

9. Turbocompoundlagerung gemäß einem der Ansprüche 6 bis 8, **dadurch gekennzeichnet, dass** die Verdichterwelle (20) ein Verdichterrad (36) auf einer ersten Seite des Grundträgers (1) trägt und die Turbinenwelle (18) ein Turbinenrad (31) auf einer zweiten, der ersten Seite abgewandten Seite des Grundträgers (1) trägt.

10. Turbocompoundlagerung gemäß einem der Ansprüche 8 oder 9, **dadurch gekennzeichnet, dass** das Primärrad (9) der hydrodynamischen Kupplung (8) ein Kupplungszahnrad (12) insbesondere in Form eines Außenzahnrades aufweist und die Turbinenwelle (18) ein Turbinenzahnrad (19) trägt, wobei das Kupplungszahnrad (12) mit dem Verdichterzahnrad (21) und dem Turbinenzahnrad (19) kämmt.

11. Turbocompoundlagerung gemäß einem der Ansprüche 1 bis 10, **dadurch gekennzeichnet, dass** die zweite Zentrierfläche (33) durch einen ersten, vollständig umlaufenden oder im Umfangsrichtung ein- oder mehrfach unterbrochenen Bund am Kupplungslagergehäuse (4) mit einer radial nach außen gerichteten Oberfläche gebildet wird, welcher von einem Bund mit radial nach innen gerichteter Oberfläche des Turbinenlagergehäuses (32) umgriffen wird.

12. Turbocompoundlagerung gemäß einem der Ansprüche 6 bis 11, **dadurch gekennzeichnet, dass** die dritte Zentrierfläche (30) durch einen zweiten, vollständig umlaufenden oder in Umfangsrichtung ein- oder mehrfach unterbrochenen Bund am Kupplungslagergehäuse (4) mit einer radial nach außen gerichteten Oberfläche gebildet wird, welcher von einem Bund mit radial nach innen gerichteter Oberfläche des Verdichterlagergehäuses (35) umgriffen wird.

13. Turbocompoundlagerung gemäß einem der Ansprüche 11 oder 12, **dadurch gekennzeichnet, dass** der erste Bund und/oder der zweite Bund am Kupplungslagergehäuse (4) durch eine Vielzahl, insbesondere drei oder mehr, über dem Umfang verteilte Arme (29) gebildet wird.

14. Turbocompoundlagerung gemäß einem der Ansprüche 1 bis 13, **dadurch gekennzeichnet, dass** das Turbinenlagergehäuse (32) ein axiales Ende des Kupplungslagergehäuses (4) vollständig umschließt.

15. Turbocompoundlagerung gemäß einem der Ansprüche 6 bis 14, **dadurch gekennzeichnet, dass** das Verdichterlagergehäuse (35) ein axiales Ende, insbesondere das dem vom Turbinenlagergehäuse (32) umschlossenen axialen Ende entgegengesetzte axiale Ende des Kupplungslagergehäuses (4) vollständig umschließt.

16. Turbocompoundlagerung gemäß einem der Ansprüche 14 oder 15, **dadurch gekennzeichnet, dass** das Turbinenlagergehäuse (32) und/oder das Verdichterlagergehäuse (35) gegen den Grundträger (1) abgedichtet und insbesondere an diesem angeflanscht ist, insbesondere über seinen gesamten Umfang.

## Claims

1. A turbo compound bearing for attaching a turbo compound system to an internal combustion engine (40), the turbo compound bearing comprising:
an exhaust gas turbine having a turbine shaft (18) mounted in a turbine bearing housing (32);
a hydrodynamic clutch (8) having a clutch shaft (6) mounted in a clutch bearing housing (4); wherein
a plate-shaped base support (1) is provided for fastening the internal combustion engine (40), said plate-shaped base support having at least one first centering surface (3), on which the clutch bearing housing (4) is aligned, **characterized in that**
the clutch bearing housing (4) has at least one second centering surface (33), on which the turbine bearing housing (32) is aligned, and
the clutch bearing housing (4) is plugged into the plate-shaped base support (1) from one side and the turbine bearing housing (32) is plugged into the plate-shaped base support from the other side.

2. The turbo compound bearing according to claim 1, **characterized in that** the hydrodynamic clutch (8) has a primary wheel (9) and a secondary wheel (7), which together form a toroidal working chamber, the primary wheel (9) has a drive connection to the turbine shaft (18), the secondary wheel (7) has a drive connection to an output (22) for connection to a drive shaft of the internal combustion engine, and the clutch bearing housing (4) is plugged through the base support (1) or is plugged into the latter in such a way that the drive connection between the primary wheel (9) and the turbine shaft (18) is formed at least partially on a first side of the base support (1) and the drive connection between the secondary wheel (7) and the output (22) is formed at least partially on a second side of the base support (1), said second side facing away from the first side.

3. The turbo compound bearing according to claim 2, **characterized in that** the output (22) is formed by an output gearwheel (27) mounted on the base support (1) and/or by an output shaft (28).

4. The turbo compound bearing according to any of claims 2 or 3, **characterized in that** the clutch shaft (6) carries the primary wheel (9) or the secondary wheel (7) at one of its two axial ends and carries a pinion (11), which has a drive connection to the output (22) or to the turbine shaft (18), at the other of its two ends, and is guided through an opening (25) in the base support (1).

5. The turbo compound bearing according to any of claims 1 to 4, **characterized in that** the base support (1) has a first opening (23), through which the turbine shaft (18) is plugged, and a second opening (25), through which the clutch bearing housing (4) is plugged or into which the clutch bearing housing (4) is plugged.

6. The turbo compound bearing according to any of claims 1 to 5, **characterized in that** a flow compressor having a compressor shaft (20) mounted in a compressor bearing housing (35) is provided, and the base support (1) and/or the clutch bearing housing (4) has at least one third centering surface (30), on which the compressor bearing housing (35) is aligned.

7. The turbo compound bearing according to claims 5 and 6, **characterized in that** the base support (1) has a third opening (24), through which or into which the compressor bearing housing (35) and/or the compressor shaft (20) is plugged.

8. The turbo compound bearing according to any of claims 6 or 7, **characterized in that** the compressor shaft (22) carries a compressor gearwheel (21) which has a drive connection to the primary wheel (9) of the hydrodynamic clutch (8).

9. The turbo compound bearing according to any of claims 6 to 8, **characterized in that** the compressor shaft (20) carries a compressor wheel (36) on a first side of the base support (1) and the turbine shaft (18) carries a turbine wheel (31) on a second side of the base support (1), said second side facing away from the first side.

10. The turbo compound bearing according to any of claims 8 or 9, **characterized in that** the primary wheel (9) of the hydrodynamic clutch (8) has a clutch gearwheel (12), in particular in the form of an outer gearwheel, and the turbine shaft (18) carries a turbine gearwheel (19), wherein the clutch gearwheel (12) meshes with the compressor gearwheel (21) and with the turbine gearwheel (19).

11. The turbo compound bearing according to any of claims 1 to 10, **characterized in that** the second centring surface (33) is formed by a first shoulder on the clutch bearing housing (4), which first shoulder is fully circumferential or is interrupted one or more times in the circumferential direction and has a radially outwardly directed surface which is encompassed by a shoulder of the turbine bearing housing (32) that has a radially inwardly directed surface.

12. The turbo compound bearing according to any of claims 6 to 11, **characterized in that** the third centering surface (30) is formed by a second shoulder on the clutch bearing housing (4), which second shoulder is fully circumferential or is interrupted one or more times in the circumferential direction and has a radially outwardly directed surface which is encompassed by a shoulder of the compressor bearing housing (35) that has a radially inwardly directed surface.

13. The turbo compound bearing according to any of claims 11 or 12, **characterized in that** the first shoulder and/or the second shoulder on the clutch bearing housing (4) is formed by a plurality of, in particular three or more, arms (29) distributed around the circumference.

14. The turbo compound bearing according to any of claims 1 to 13, **characterized in that** the turbine bearing housing (32) completely encloses one axial end of the clutch bearing housing (4).

15. The turbo compound bearing according to any of claims 6 to 14, **characterized in that** the compressor bearing housing (35) completely encloses one axial end of the clutch bearing housing (4), in particular the axial end thereof that is located opposite to the axial end enclosed by the turbine bearing housing (32).

16. The turbo compound bearing according to any of claims 14 or 15, **characterized in that** the turbine bearing housing (32) and/or the compressor bearing housing (35) is sealed against the base support (1) and in particular is flanged onto the latter, in particular around their entire circumference.

## Revendications

1. Support de turbocompound servant à relier un système de turbocompound à un moteur à combustion interne (40), comprenant
une turbine à gaz d'échappement dotée d'un arbre de turbine (18) monté dans un logement de palier de turbine (32) ;
un accouplement hydrodynamique (8) doté d'un arbre d'accouplement (6) monté dans un logement de palier d'accouplement (4) ; dans lequel
un support de base (1) en forme de plaque est prévu pour la fixation du moteur à combustion interne (40), lequel présente au moins une première surface de centrage (3) sur laquelle le logement de palier d'accouplement (4) est aligné ;
**caractérisé en ce que**
le logement de palier d'accouplement (4) présente au moins une deuxième surface de centrage (33) sur laquelle le logement de palier de turbine (32) est aligné, et le logement de palier d'accouplement (4) est inséré d'un côté et le logement de palier de turbine (32) de l'autre côté dans le support de base (1) en forme de plaque.

2. Support de turbocompound selon la revendication 1, **caractérisé en ce que** l'accouplement hydrodynamique (8) présente une roue primaire (9) et une roue secondaire (7) qui forment ensemble une chambre de travail en forme de tore, la roue primaire (9) est en liaison d'entraînement avec l'arbre de turbine (18), la roue secondaire (7) est en liaison d'entraînement avec une sortie (22) pour la liaison avec un arbre d'entraînement du moteur à combustion interne et le logement de palier d'accouplement (4) est positionné inséré à travers le support de base (1) ou dans celui-ci de sorte que la liaison d'entraînement entre la roue primaire (9) et l'arbre de turbine (18) soit réalisée au moins partiellement sur un premier côté du support de base (1) et la liaison d'entraînement entre la roue secondaire (7) et la sortie (22) soit réalisée au moins partiellement sur un deuxième côté, opposé au premier côté, du support de base (1).

3. Support de turbocompound selon la revendication 2, **caractérisé en ce que** la sortie (22) est formé par une roue dentée de sortie (27) montée sur le support de base (1) et/ou un arbre de sortie (28).

4. Support de turbocompound selon l'une des revendications 2 ou 3, **caractérisé en ce que** l'arbre d'accouplement (6) porte la roue primaire (9) ou la roue secondaire (7) à une de ses deux extrémités axiales et un pignon (11) qui est en liaison d'entraînement avec la sortie (22) ou l'arbre de turbine (18) à l'autre de ses deux extrémités axiales et est positionné conduit à travers une ouverture (25) dans le support de base (1).

5. Support de turbocompound selon l'une des revendications 1 à 4, **caractérisé en ce que** le support de base (1) présente une première ouverture (23), à travers laquelle l'arbre de turbine (18) est positionné inséré, et présente une deuxième ouverture (25) à travers laquelle le logement de palier d'accouplement (4) est positionné inséré ou dans laquelle le logement de palier d'accouplement (4) est positionné inséré.

6. Support de turbocompound selon l'une des revendications 1 à 5, **caractérisé en ce qu'**un compresseur doté d'un arbre de compresseur (20) monté dans un logement de palier de compresseur (35) est prévu et le support de base (1) et/ou le logement de palier d'accouplement (4) présente au moins une troisième surface de centrage (30) sur laquelle le logement de palier de compresseur (35) est aligné.

7. Support de turbocompound selon les revendications 5 et 6, **caractérisé en ce que** le support de base (1) présente une troisième ouverture (24) à travers laquelle ou dans laquelle le logement de palier de compresseur (35) et/ou l'arbre de compresseur (20) est positionné inséré.

8. Support de turbocompound selon l'une des revendications 6 ou 7, **caractérisé en ce que** l'arbre de compresseur (22) porte une roue dentée de compresseur (21) qui est en liaison d'entraînement avec la roue primaire (9) de l'accouplement hydrodynamique (8).

9. Support de turbocompound selon l'une des revendications 6 à 8, **caractérisé en ce que** l'arbre de compresseur (20) porte une roue de compresseur (36) sur un premier côté du support de base (1) et l'arbre de turbine (18) porte une roue de turbine (31) sur un deuxième côté, opposé au premier côté, du support de base (1).

10. Support de turbocompound selon l'une des revendications 8 ou 9, **caractérisé en ce que** la roue primaire (9) de l'accouplement hydrodynamique (8) présente une roue dentée d'accouplement (12), en particulier sous la forme d'une roue dentée extérieure, et l'arbre de turbine (18) porte une roue dentée de turbine (19), la roue dentée d'accouplement (12) engrenant avec la roue dentée de compresseur (21) et la roue dentée de turbine (19).

11. Support de turbocompound selon l'une des revendications 1 à 10, **caractérisé en ce que** la deuxième surface de centrage (33) est formée par un premier collet, s'étendant complètement circonférentiellement ou interrompu une ou plusieurs fois dans la direction circonférentielle sur le logement de palier d'accouplement (4), ayant une surface dirigée radialement vers l'extérieur, lequel est entouré par un collet ayant une surface dirigée radialement vers l'intérieur du logement de palier de turbine (32).

12. Support de turbocompound selon l'une des revendications 6 à 11, **caractérisé en ce que** la troisième surface de centrage (30) est formée par un deuxième collet, s'étendant complètement circonférentiellement ou interrompu une ou plusieurs fois dans la direction circonférentielle sur le logement de palier d'accouplement (4), ayant une surface dirigée radialement vers l'extérieur, lequel est entouré par un collet ayant une surface dirigée radialement vers l'intérieur du logement de palier de compresseur (35).

13. Support de turbocompound selon l'une des revendications 11 ou 12, **caractérisé en ce que** le premier collet et/ou le deuxième collet est formé sur le logement de palier d'accouplement (4) par une pluralité, en particulier trois ou plus, bras (29) répartis sur la circonférence.

14. Support de turbocompound selon l'une des revendications 1 à 13, **caractérisé en ce que** le logement de palier de turbine (32) entoure complètement une extrémité axiale du logement de palier d'accouplement (4).

15. Support de turbocompound selon l'une des revendications 6 à 14, **caractérisé en ce que** le logement de palier de compresseur (35) entoure complètement une extrémité axiale, en particulier l'extrémité axiale du logement de palier d'accouplement (4) opposée à l'extrémité axiale entourée par le logement de palier de turbine (32).

16. Support de turbocompound selon l'une des revendications 14 ou 15, **caractérisé en ce que** le logement de palier de turbine (32) et/ou le logement de palier de compresseur (35) est rendu étanche par rapport au support de base (1) et en particulier bridé sur celui-ci, en particulier sur toute sa circonférence.
